# EUROPÄISCHE PATENTSCHRIFT

(11) **EP 4 112 357 B1**
(45) Veröffentlichungstag und Bekanntmachung des Hinweises auf die Patenterteilung: **02.12.2026**
(21) Anmeldenummer: 22170191.5
(22) Anmeldetag: 27.04.2022
(51) Int. Cl.: B60L 5/32, B60L 5/04, B60L 5/12

(54) **STROMABNEHMER FÜR EIN ELEKTRISCH ODER HYBRIDELEKTRISCH ANGETRIEBENES STRASSENFAHRZEUG SOWIE STRASSENFAHRZEUG MIT EINEM SOLCHEN STROMABNEHMER**
CURRENT COLLECTOR FOR AN ELECTRIC OR HYBRID-ELECTRIC DRIVEN ROAD VEHICLE AND ROAD VEHICLE COMPRISING SUCH A CURRENT COLLECTOR
COLLECTEUR DE COURANT POUR UN VÉHICULE ROUTIER ÉLECTRIQUE OU HYBRIDE-ÉLECTRIQUE, AINSI QUE VÉHICULE ROUTIER DOTÉ D'UN TEL COLLECTEUR DE COURANT

(30) Priorität: 30.06.2021 DE 102021206840
(43) Veröffentlichungstag der Anmeldung: 04.01.2023
(73) Patentinhaber: Siemens Mobility GmbH, 80997 München (DE)
(72) Erfinder: Blase, Bastian, 13156 Berlin (DE); Bühs, Florian, 10777 Berlin (DE)
(74) Vertreter: Siemens Patent Attorneys

(56) Entgegenhaltungen:
- WO-A1-2015/112174
- DE-A1- 102018 214 873
- DE-A1- 3 909 095

## Beschreibung

Die Erfindung betrifft einen Stromabnehmer für ein elektrisch oder hybridelektrisch angetriebenes Straßenfahrzeug nach dem Oberbegriff des Patentanspruches 1 sowie ein mit einem solchen Stromabnehmer ausgestattetes Straßenfahrzeug.

Ein derartiger Stromabnehmer ist aus der Offenlegungsschrift DE 10 2018 214 873 A1 bekannt. Der Stromabnehmer ist zur Montage auf einem Straßenfahrzeug, etwa einem Lastkraftwagen oder Bus, vorgesehen, um elektrischer Energie aus einer zweipoligen Oberleitungsanlage mit einen Hin- und einen Rückleiter bildenden Fahrdrähten einzuspeisen. Er umfasst ein gelenkiges Traggestänge, welches fahrdrahtseitig Wippenanordnungen mit Schleifleisten trägt und fahrzeugseitig ein Basisgelenk zur Anlenkung an das Triebfahrzeug aufweist. Ferner umfasst der Stromabnehmer einen pneumatischen Hubantrieb, der derart mit dem Traggestänge gekoppelt ist, dass die Wippenanordnungen bei Druckbeaufschlagung des Hubantriebs aus einer unteren Ablageposition in einer obere Kontaktposition anhebbar und bei Druckentlastung eigengewichtgetrieben in die Ablageposition absenkbar sind. Der Luftspeicher ist über eine ein Abluftventil aufweisende Abluftleitung mit der Umgebung verbindbar. Dadurch erfolgt ein eigengewichtgetriebenes Absenken der Wippenanordnungen in zwei aufeinanderfolgenden Absenkphasen: In einer Schnellabsenkphase, in welcher die Wippenanordnungen zunächst aus der Kontaktposition in eine möglichst weit unten liegende Zwischenposition sinken, strömt Abluft durch das Eigengewicht der Wippenanordnungen aus dem Hubantrieb in den Luftspeicher, bis sich ein Druckgleichgewicht eingestellt hat. In einer Ablagephase, in der die Wippenanordnungen aus der Zwischenposition dann weiter in die Ablageposition sinken, strömt Abluft durch die Abluftleitung in die Umgebung. Das Abluftventil des bekannten Stromabnehmers ist dabei als Drosselventil mit fest eingestelltem Durchlassquerschnitt ausgebildet. Um die Ablagesenkphase auf eine für die Praxis akzeptable Zeitdauer zu begrenzen, ist der Durchlassquerschnitt so groß bemessen, dass der Aufprall des Traggestänges in der Ablageposition durch Stoßdämpfer abgemildert wird.

Der Erfindung liegt daher die Aufgabe zugrunde, einen Stromabnehmer der eingangs genannten Art bereitzustellen, der ein schnelles und sicheres Absenken der Wippenanordnungen bei einfachem Aufbau ermöglicht.

Die Aufgabe wird gemäß der Erfindung gelöst durch einen gattungsgemäßen Stromabnehmer mit den im kennzeichnenden Teil des Patentanspruches 1 angegebenen Merkmalen. Ein erfindungsgemäßer Stromabnehmer ist dadurch gekennzeichnet, dass das Abluftventil zur Steuerung einer eigengewichtgetrieben Absenkphase der Wippenanordnungen über Steuermittel schaltbar ist. Damit kann durch Öffnen des Abluftventils dessen Durchlassquerschnitt für Abluft freigegeben und durch Schließen desselben gesperrt werden. Dabei sind Steuermittel dazu ausgebildet, das Abluftventil zu öffnen, wenn die Wippenanordnungen eine Zwischenposition erreichen, in welcher der im Luftspeicher ansteigende Luftdruck einen lokalen Maximalwert annimmt.

In einer Schnellabsenkphase, in der die Wippenanordnungen aus ihrer Kontaktposition bis zur Zwischenposition absenken, drückt das Eigengewicht der Wippenanordnungen und des Traggestells Abluft aus dem druckentlasteten Hubantrieb, beispielsweise einem Luftbalg, in den Luftspeicher. Dabei nimmt der Luftdruck im Luftspeicher mit voranschreitendem Absinken der Wippenanordnungen und Komprimieren des Hubantriebs zu, bis der Luftspeicher gefüllt ist und das darin befindliche Abluftvolumen sich durch das Eigengewicht nicht weiter komprimieren lässt. Aufgrund des zur Verfügung stehenden Speichervolumens des Luftspeichers und geringer Strömungswiderstände im Luftweg zwischen Hubantrieb und Luftspeicher fallen Wippenanordnungen und Traggestell aufgrund der Schwerkraft in kurzer Zeit und werden erst kurz vor Erreichen der Zwischenposition durch den sich aufbauenden Luftdruck im Luftspeicher gebremst. Das geschlossene Abluftventil verhindert ein Entweichen von Abluft aus dem Luftspeicher in die Umgebung. In der Zwischenposition der Wippenanordnungen hat sich der Luftdruck im Luftspeicher auf einen Maximalwert vergrößert, der gegenüber dem dann im Hubantrieb herrschenden Luftdruck als Überdruck eine Rückströmung von Abluft in den Hubantrieb und damit ein Wiederansteigen der Wippenanordnungen bewirken würde. Ohne den erfindungsgemäßen Steuereingriff würden Wippenanordnungen und Traggestell nach einigen gedämpften Vertikalschwingungen eine Gleichgewichtsposition einnehmen, die höher liegt als die erfindungsgemäße Zwischenposition.

Indem die Steuermittel das Abluftventil öffnen, wenn die Wippenanordnungen diese Zwischenposition erreichen, wird die geschilderte Aufwärtsbewegung der Wippenanordnungen unterbunden, weil sich der Überdruck im Luftspeicher über das geöffnete Abluftventil abbauen kann. Damit beginnt die sich an die Schnellabsenkphase der Wippenanordnungen anschließende Ablageabsenkphase in der Zwischenposition, von der aus für die Wippenanordnungen eine verglichen mit der Gleichgewichtsposition geringere Fallhöhe bis zur Ablageposition zurückzulegen ist und in der die Wippenanordnungen praktisch keine vertikale Geschwindigkeitskomponente haben. Hierdurch wird erreicht, dass die Ablageabsenkphase kurz ist und das Traggestell mit so geringer Vertikalgeschwindigkeit auf die Ablageeinrichtung auftrifft, dass Beschädigungen des Stromabnehmers - etwa durch Materialermüdungen - vermieden oder lange hinausgezögert werden können, ohne dass Stoßdämpfer zur Abmilderung des Aufpralls eingesetzt werden müssen. Dabei ist ein Speichervolumen des Luftspeichers kleiner bemessen als ein Arbeitsvolumen des Hubantriebs.

In einer vorteilhaften Ausführungsform des erfindungsgemäße Stromabnehmers weisen die Steuermittel einen Drucksensor zur Erfassung des im Luftspeicher herrschenden Luftdruckes auf. Die Steuermittel stellen das Erreichen der Zwischenposition durch direkte Überwachung des Luftdruckverlaufes im Luftspeicher fest. Hierdurch können die Steuermittel unmittelbar feststellen, wenn sich die Luftdruckwerte im Luftspeicher nicht mehr erhöhen. Die Steuermittel können beispielsweise die Differenzen zu dem jeweils zuletzt erfassten Druckwert mit einem Schwellwert vergleichen und bei Unterschreiten des Schwellwertes ein Erreichen des lokalen Maximalwertes des Luftdrucks im Luftspeicher - also das Erreichen der Zwischenposition - feststellen.

In einer weiteren vorteilhaften Ausführungsform des erfindungsgemäße Stromabnehmers weist das Abluftventil eine Druckmembran auf. Dabei ist die Abluftleitung zwischen Luftspeicher und Abluftventil durch zwei parallel verlaufende und auf gegenüberliegenden Membranseiten der Druckmembran mündende Leitungszweige gebildet. In eine der beiden Leitungszweige ist ein Rückschlagventil mit einer Sperrwirkung in Richtung des Luftspeichers geschaltet. Die Steuermittel stellen ein Erreichen der Zwischenposition durch Detektion einer Druckdifferenz auf gegenüberliegenden Membranseiten fest. Während der Schnellabsenkphase strömt Abluft aus dem Hubantrieb in den Luftspeicher und von dort weiter durch beide Leitungszweige bis zur Druckmembran des geschlossenen Abluftventils, wobei beide Membranseiten mit demselben, ansteigenden Luftdruck beaufschlagt werden. Solange keine Druckdifferenz zwischen den Membranseiten erkannt wird, bleibt das Abluftventil geschlossen, was der Fall ist, bis die Wippenanordnungen die Zwischenposition erreicht haben. Beginnen die Wippenanordnungen aus der Zwischenposition eine Aufwärtsbewegung, fängt der Luftdruck im Luftspeicher an, vom lokalen Maximalwert abzusinken und Abluft wird vom Luftspeicher aus den Leitungszweigen der Abluftleitung zurückgesogen. Dabei wird der Abluftstrom aus dem einen Leitungszweig durch das Rückschlagventil blockiert, im anderen Leitungszweig hingegen nicht. Dies führt zu einer Druckdifferenz auf den gegenüberliegenden Membranseiten der Druckmembran im Abluftventil. Die erkannte Druckdifferenz signalisiert damit das Erreichen der Zwischenposition, worauf das Abluftventil durch die Steuermittel geöffnet wird.

In einer weiteren vorteilhaften Ausführungsform des erfindungsgemäße Stromabnehmers weisen die Steuermittel ein Verzögerungsglied mit einer vorgebbaren Schaltzeit auf und sind dazu ausgebildet, das Abluftventil zu öffnen, wenn nach Auslösung der Absenkphase die Schaltzeit abgelaufen ist. Das Verzögerungsglied kann als sogenanntes RC-Glied ausgebildet sein und dessen durch einen Widerstand R und einen Kondensator C bestimmte Schaltzeit in Vorversuchen so ermittelt worden sein, dass gemessen vom Beginn der Absenkphase - also dann, wenn ein Abbügeln des Stromabnehmers ausgelöst wurde - die Zwischenposition mit lokalem Maximalwert des Luftdruckes im Luftspeicher nach Ablauf dieser Schaltzeit erreicht wird.

In einer weiteren vorteilhaften Ausführungsform umfasst der erfindungsgemäße Stromabnehmer einer Ablageeinrichtung, auf die sich das Traggestänge in der Ablageposition der Wippenanordnungen stützt. Dabei ist ein Strömungsquerschnitt des geöffneten Abluftventils derart bemessen, dass bei beschädigungsfreiem Auftreffen des Traggestells auf die Ablageeinrichtung die Dauer der Absenkphase von Zwischen- zu Ablageposition minimiert ist. Hierdurch kann über die Ausgestaltung der Ablageeinrichtung und die Bemessung des Strömungsquerschnitts des Abluftventils eine Dauer für die Ablageabsenkphase eingestellt werden, die in Summe mit der Dauer der Schnellabsenkphase eine vorgegebene Gesamtabsenkzeit einhält. Dabei kann mit Vorteil auf Stoßdämpfer in der Ablageeinrichtung verzichtet werden, ohne dass Stromabnehmer oder Ablageeinrichtung durch das Auftreffen des Traggestells beschädigt werden.

In einer weiteren vorteilhaften Ausführungsform des erfindungsgemäßen Stromabnehmers ist der Luftspeicher über eine weitere Abluftleitung mit der Umgebung verbunden, in die ein Drosselventil mit fest eingestelltem Durchlassquerschnitt geschaltet ist. Diese Variante stellt eine Weiterbildung des eingangs beschriebenen Stromabnehmers mit einem Drosselventil mit fest eingestelltem Durchlassquerschnitt dar. Hier kann nun Abluft während des Absenkvorgangs parallel durch das Drosselventil aus dem Luftspeicher entweichen. Dabei ist der Durchlassquerschnitt vorzugsweise gering gewählt.

Die Erfindung betrifft außerdem ein Straßenfahrzeug mit einem elektrischen oder hybridelektrischen Traktionsantrieb und mit einem Stromabnehmer nach einem der vorangehenden Ansprüche zur Einspeisung elektrischer Traktionsenergie aus einer zweipoligen Oberleitungsanlage.

Weitere Eigenschaften und Vorteile der Erfindung ergeben sich aus nachfolgender Beschreibung eines Ausführungsbeispiels anhand der Zeichnungen, in deren
- FIG 1: ein Schaltbild einer pneumatischen Schaltung für den Betrieb des Stromabnehmers und
- FIG 2: ein Weg-Zeit-Diagramm des Absenkvorgangs der Wippenanordnungen
schematisch veranschaulicht sind.

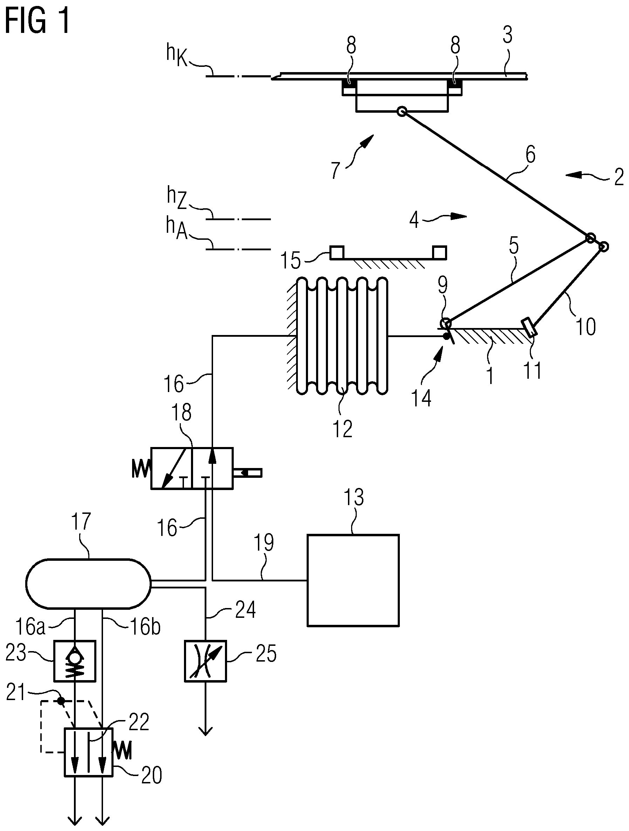

Von einem elektrisch oder hybridelektrisch angetriebenen Straßenfahrzeug 1, insbesondere ein Lastkraftwagen oder Bus, ist lediglich ein Teil angedeutet, das einen erfindungsgemäßen Stromabnehmer 2 abstützt. Über den Stromabnehmer 2 kann zur Traktionsversorgung - auch während der Fahrt - elektrische Energie aus einer Oberleitungsanlage in das Straßenfahrzeug 1 eingespeist werden. Die Oberleitungsanlage ist zweipolig ausgebildet und umfasst über einer Fahrbahn verlaufende, als Hin- und Rückleiter ausgebildete Fahrdrähte 3, von welchen in FIG 1 aufgrund gleicher Fahrdrahthöhe nur einer zu sehen ist. Der Stromabnehmer 2 ist als Halbscherenpantograph ausgebildet und umfasst ein gelenkiges Traggestänge 4 mit einem Unterarm 5 und zwei Oberarmen 6, die gelenkig miteinander verbunden sind. Jeder der beiden Oberarme 6 trägt fahrdrahtseitig eine Wippenanordnung 7 mit zwei parallelen Schleifleisten 8, die quer zu einer Fahrzeuglängsachse hintereinander angeordnet sind. Zur Anlenkung des Stromabnehmers 2 an das Straßenfahrzeug 1 ist der Unterarm 5 fahrzeugseitig über ein Basisgelenk 9 mit dem Straßenfahrzeug 1 schwenkbar verbunden. An den Enden der Oberarme 6 sind je eine Zugstange 10 angelenkt, die über ein Kreuzlager 11 mit dem Straßenfahrzeug 1 gelenkig verbunden sind.

Mit dem Traggestänge 4 ist gemäß FIG 1 ein pneumatischer Hubantrieb 12 in Form eines Luftfederbalgs so gekoppelt, dass die Wippenanordnungen 7 bei Druckbeaufschlagung des Hubantriebs 12 aus einer unteren Ablageposition h_{A} in eine obere Kontaktposition h_{K} anhebbar ist. Die Druckbeaufschlagung wird durch eine Druckluftversorgung 13 bewerkstelligt, zu der - nicht näher dargestellt - ein Kompressor, ein Druckluftbehälter, ein Öl-/ Wasserabscheider und eine Druckregeleinrichtung gehören können. Geeignete mechanische Koppelmittel 14, beispielsweise ein Balghebel mit Umlenkseil, wandeln eine lineare Stellkraft des Hubantriebs 12 in ein Drehmoment des Unterarms 5 im Basisgelenk 9 um. In der Ablageposition h_{A} ist das Traggestänge 4 des abgebügelten Stromabnehmers 2 zusammengeklappt und liegt auf einer Ablageeinrichtung 15 auf, so dass das Straßenfahrzeug 1 die für einen Betrieb außerhalb elektrifizierter Fahrstrecken einzuhaltende, zulässige Gesamtfahrzeughöhe nicht überschreitet und der Stromabnehmer 2 sich in einem elektrisch gesicherten Zustand befindet. Ein Abbügeln des Stromabnehmers 2 ist auch vor einem gesicherten Wechsel des Straßenfahrzeugs 1 auf einen nicht elektrifizierten Fahrstreifen, etwa bei Überholmanövern, erforderlich. Beim Anbügeln des Stromabnehmers 2 erzwingen die Zugstangen 10 ein Aufrichten der Oberarme 6, wenn der Unterarm 5 aufgerichtet wird. In der Kontaktposition h_{K} werden die Schleifleisten 8 der Wippenanordnungen 7 an je einen der Fahrdrähte 3 der Oberleitungsanlage gedrückt, so dass sowohl im Stand als auch während der Fahrt Energie aus der Oberleitungsanlage in das Straßenfahrzeug 1 übertragen werden kann. Um die Wippenanordnungen 7 aus der Kontaktposition h_{K} in die Ablageposition h_{A} zu überführen, erfolgt eine Druckentlastung des Hubantriebs 12, so dass die Wippenanordnungen 7 durch ihr Eigengewicht getrieben sinken und das Traggestänge 4 zusammenklappt.

Hierzu ist der Hubantrieb 12 über eine Abluftleitung 16 mit einem als Windkessel ausgebildeten Luftspeicher 17 verbunden. Ein Speichervolumen des Luftspeichers 17 ist dabei kleiner bemessen als ein Arbeitsvolumen des Hubantriebs 12. Zwischen dem Hubantrieb 12 und dem Luftspeicher 17 ist in der Abluftleitung 16 ein elektrisch betätigbares Zwei-Wege-Ventil 18 angeordnet, an dem auch eine von der Druckluftversorgung 13 kommende Zuluftleitung 19 angeschlossen ist. Im nicht betätigten Zustand des Zwei-Wege-Ventils 18 besteht eine pneumatische Verbindung zwischen der Druckluftversorgung 13 und dem Hubantrieb 12, so dass der Stromabnehmer 2 angehoben oder im angebügelten Zustand eine Anpresskraft der Schleifleisten 8 an die Fahrdrähte 3 geregelt werden kann. In diesem Zustand wird der zwischen Zwei-Wege-Ventil 18 und Hubantrieb 12 verlaufende Abschnitt der Abluftleitung 16 als Zuluftleitung genutzt. Im elektrisch betätigten Zustand gibt das Zwei-Wege-Ventil 18 eine pneumatische Verbindung zwischen Hubantrieb 12 und Luftspeicher 17 frei, während der Anschluss der Zuluftleitung 19 gesperrt ist.

Aus dem Luftspeicher 17 führt die Abluftleitung 16 weiter zu einem Abluftventil 20 und mündet anschließend in die Umgebung. Das Abluftventil 20 ist zu Beginn der Absenkphase geschlossen. Zur Steuerung der eigengewichtgetrieben Absenkphase der Wippenanordnungen 7 ist das Abluftventil 20 über Steuermittel 21 schaltbar. Die Steuermittel 21 sind dazu ausgebildet, das Abluftventil 20 zu öffnen, wenn die Wippenanordnungen 7 eine Zwischenposition h_{Z} erreichen, in welcher der im Luftspeicher 17 ansteigende Luftdruck einen lokalen Maximalwert annimmt. Im dargestellten Ausführungsbeispiel weist das Abluftventil 20 eine Druckmembran 22 auf, die schematisch durch den senkrechten Querstrich im Schaltsymbol angedeutet ist. Die Abluftleitung 16 zwischen Luftspeicher 17 und Abluftventil 20 ist durch zwei parallel verlaufende und auf gegenüberliegenden Membranseiten der Druckmembran 22 mündende Leitungszweige 19a, 20b gebildet. In einen der beiden Leitungszweige 16a ist ein Rückschlagventil 23 mit einer Sperrwirkung in Richtung des Luftspeichers 17 geschaltet. Die Steuermittel 21 stellen ein Erreichen der Zwischenposition h_{Z} durch Detektion einer Druckdifferenz auf gegenüberliegenden Membranseiten der Druckmembran 22 fest. Optional kann vom Luftspeicher 17 eine zusätzliche Abluftleitung 24 an die Umgebung führen, in die ein Drosselventil 25 mit fest eingestelltem Durchlassquerschnitt geschaltet ist.

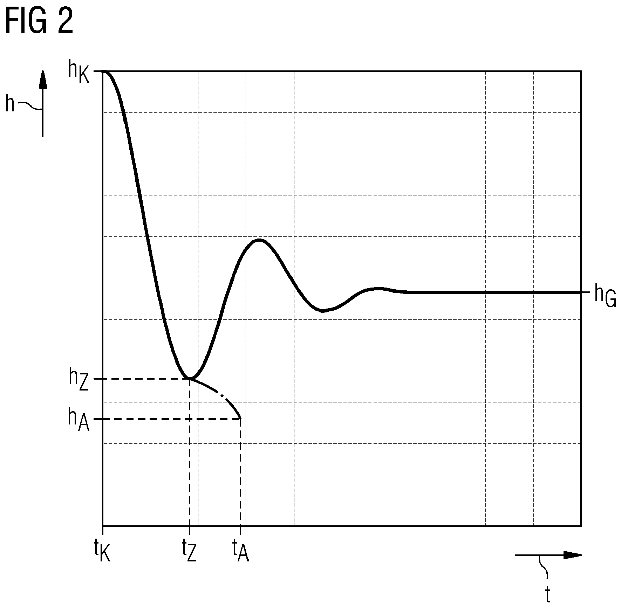

Die Funktion eines Stromabnehmers 2 gemäß FIG 1 wird nun unter zusätzlichem Verweis auf FIG 2 erläutert, in welcher ein den Absenkvorgang beschreibendes Weg-Zeit-Diagramm der Wippenanordnungen 7 dargestellt ist. Bei Betätigung des Zwei-Wege-Ventils 18 zu einem Zeitpunkt t_{K}, zu dem sich die Wippenanordnungen 7 in ihrer oberen Kontaktposition h_{K} befinden, wird der Hubantrieb 12 druckentlastet, indem das Zwei-Wege-Ventil 18 die Zuluftleitung 19 sperrt und die Abluftleitung 16 zum Luftspeicher 17 freigibt. Durch sein plötzlich bereitgestelltes Extravolumen kann der Luftspeicher 17 komprimierte Luft aus dem Hubantrieb 12 aufnehmen, wodurch der Druck im Hubantrieb 17 schnell unter einen Wert absinkt, bei dem der Stromabnehmer 2 durch seine Eigengewicht zu sinken beginnt. Schon wenige Sekundenbruchteile nach Öffnen des Zwei-Wege-Ventils 18 herrscht zwischen den Volumina von Hubantrieb 12 und Luftspeicher 17 ein Druckausgleich. Die ursprünglich nur im Hubantrieb 12 enthaltene Druckluft, welche genügte, die Wippenanordnungen 7 an die Fahrdrähte 3 zu drücken, nimmt beim Entlüften das von Hubantrieb 12 und Luftspeicher 17 zur Verfügung gestellte Gesamtvolumen ein. Ist ein Drosselventil 25 in der weiteren Abluftleitung 24 vorgesehen, wird Abluft nur langsam durch deren klein eingestellten Durchlassquerschnitt an die Umgebung abgegeben. Beim Fallen der Wippenanordnungen 7 wird der Hubantrieb 12 durch die Koppelmittel 14 zusammengedrückt, sein Volumen sinkt und der Druck in Hubantrieb 12 und Luftspeicher 17 bildet ein dynamisches Gleichgewicht zwischen Entlüftung und Komprimierung. Die Fallkurve bei geschlossenem Abluftventil 22 - in FIG 2 die durchgezogene Linie - zeigt, dass die Abluft im Luftspeicher 17 so stark komprimiert wird, dass der Luftdruck zu einem erneuten Hochfedern der Wippenanordnungen 7 führt, bis in Abhängigkeit der Dämpfung durch Strömungswiderstände die Wippenanordnungen 7 in eine Gleichgewichtsposition h_{G} schwingen.

An diesem Verlauf der Fallkurve setzt die Erfindung an, genauer gesagt, im zuerst auftretenden lokalen Minimum dieser Fallkurve. Dort haben die Wippenanordnungen 7 keine vertikale Geschwindigkeitskomponente. Durch das Öffnen des Abluftventils 20 in diesem Moment kann die maximal komprimierte Abluft an die Umgebung entweichen und Wippenanordnungen 7 mit Traggestänge 4 fallen aus niedrigster Höhe, also mit minimaler potenzieller Energie, weiter in Richtung Ablageposition h_{A}. Damit ist auch die beim Auftreffen des Stromabnehmers 2 auf die Ablageeinrichtung 15 umgewandelte kinetische Energie ebenfalls minimiert. Diese Ablageabsenkphase wird durch die Strich-Punkt-Linie zwischen t_{Z} und t_{A} in FIG 2 widergespiegelt.

Das lokale Minimum, also der untere Umlenkpunkt (t_{Z}, h_{Z}) der Wippenanordnungen 7, geht einher mit einem lokalen Maximum des Luftdruckes in Luftspeicher 17 und Hubantrieb 12. Vor seiner Öffnung lässt das Abluftventil 20 keinen Abluftstrom durch, allenfalls findet ein minimaler Abfluss durch das optionale Drosselventil 25 statt. Nach Öffnung des Abluftventils 20 lässt es einen merklich größeren Volumenstrom durch als das Drosselventil 25. Das lokale Druckmaximum wird durch die Steuermittel 21 im beschriebenen Ausführungsbeispiel wie folgt erkannt: Der Abluftstrom aus dem Luftspeicher 12 wird in zwei durch die Leitungszweige 16a und 16b der Abluftleitung 16 geführte Teilströme geteilt und auf gegenüberliegende Membranseiten der Druckmembran 22 des Abluftventils 20 geführt. Während der Schnellabsenkphase zwischen t_{K} und t_{Z} schießt die expandierende Abluft durch beide Leitungszweige 16a und 16b zum Abluftventil 20, wobei sich auf beiden Membranseiten der gleiche Druck aufbaut. Das Abluftventil 20 bleibt in Abwesenheit eines Druckunterschiedes zwischen den Membranseiten geschlossen. Beim Zurückfedern der Wippenanordnungen 7 wird der Hubantrieb 12 wieder expandiert, woraufhin der Druck im ganzen System durch das Ausdehnen der Luft zu sinken beginnt. Nur in Leitungszweig 16a kann die Luft aufgrund des Rückschlagventils 23 nicht zurück zum Luftspeicher 17 strömen; der Druck zwischen Abluftventil 20 und Rückschlagventil 23 bleibt gleich. Da im anderen Leitungszweig 16b der Druck zwischen Abluftventil 20 und Luftspeicher 17 sinkt, bildet sich an der Druckmembran 22 eine Druckdifferenz aus, die zum Öffnen des Abluftventils 20 und zum sofortigen Entlüften beider Leitungszweige 16a und 16b führt. Wippenanordnungen 7 mit Traggestänge 4 beginnen erneut zu fallen, allerdings aus niedriger Höhe h_{Z} und aus momentaner Ruhelage, bis das Traggestänge 4 zum Zeitpunkt t_{A} mit geringer Sinkgeschwindigkeit in Ablageposition h_{A} auf die Ablageeinrichtung 15 auftrifft.

Die Erfindung ermöglicht einen Kompromiss zwischen hoher Falldynamik in der Schnellabsenkphase und reduzierter Bewegung in der Ablageabsenkphase. Gleichzeitig sind keine technisch komplexen Komponenten erforderlich, sondern es können vielmehr verfügbare und erschwingliche Zukaufteile verwendet werden. Etwa hochpreisige und empfindlichen Stoßdämpfer können damit vollständig vermieden werden. Durch Kombination passiver Elemente wird eine hohe Ausfallsicherheit und eine verlässliche Robustheit erreicht. Passiv bedeutet in diesem Zusammenhang unabhängig von externen Energiequellen oder aktiven Antrieben zu sein und auf intern gespeicherte Energie für ihren Wirkprozess zurückgreifen zu können.

## Patentansprüche

1. Stromabnehmer (2) für ein elektrisch oder hybridelektrisch angetriebenes Straßenfahrzeug (1) zur Einspeisung elektrischer Traktionsenergie aus einer zweipoligen, je Kontaktpol einen Fahrdraht (3) aufweisenden Oberleitungsanlage, umfassend
- ein gelenkiges Traggestänge (4), das fahrdrahtseitig Wippenanordnungen (7) mit Schleifleisten (8) trägt und fahrzeugseitig ein Basisgelenk (9) zur Abstützung auf dem Straßenfahrzeug (1) aufweist, und
- einen pneumatischen Hubantrieb (12), der derart mit dem Traggestänge (4) gekoppelt ist, dass die Wippenanordnungen (7) bei Druckbeaufschlagung des Hubantriebs (12) aus einer unteren Ablageposition (h_{A}) in einer obere Kontaktposition (h_{K}) anhebbar und bei Druckentlastung eigengewichtgetrieben in die Ablageposition (h_{A}) absenkbar sind,
- wobei der Hubantrieb (12) zur Druckbeaufschlagung mit einer Druckluftversorgung (13) und zur Druckentlastung mit einem Luftspeicher (17) pneumatisch verbindbar ist, und
- wobei der Luftspeicher (17) über eine ein Abluftventil (20) aufweisende Abluftleitung (16, 16a, 16b) mit der Umgebung verbindbar ist,
**dadurch gekennzeichnet,**
- **dass** das Abluftventil (20) zur Steuerung einer eigengewichtgetrieben Absenkphase der Wippenanordnungen (7) über Steuermittel (21) schaltbar ist,
- wobei die Steuermittel (21) dazu ausgebildet sind, das Abluftventil (20) zu öffnen, wenn die Wippenanordnungen (7) eine Zwischenposition (h_{Z}) erreichen, in welcher der im Luftspeicher (17) ansteigende Luftdruck einen lokalen Maximalwert annimmt, und
- wobei ein Speichervolumen des Luftspeichers (17) kleiner bemessen ist als ein Arbeitsvolumen des Hubantriebs (12).

2. Stromabnehmer (2) nach Anspruch 1,
- wobei die Steuermittel einen Drucksensor zur Erfassung des im Luftspeicher (17) herrschenden Luftdruckes aufweisen und das Erreichen der Zwischenposition (h_{Z}) durch direkte Überwachung des Luftdruckverlaufes im Luftspeicher (17) feststellen.

3. Stromabnehmer (2) nach Anspruch 1,
- wobei das Abluftventil (20) eine Druckmembran (22) aufweist und die Abluftleitung (16) zwischen Luftspeicher (17) und Abluftventil (20) durch zwei parallel verlaufende und auf gegenüberliegenden Membranseiten der Druckmembran (22) mündende Leitungszweige (16a, 16b) gebildet ist,
- wobei in einen (16a) der beiden Leitungszweige ein Rückschlagventil (23) mit einer Sperrwirkung in Richtung des Luftspeichers (17) geschaltet ist, und
- wobei die Steuermittel (21) ein Erreichen der Zwischenposition (h_{Z}) durch Detektion einer Druckdifferenz auf gegenüberliegenden Membranseiten feststellen.

4. Stromabnehmer (2) nach Anspruch 1,
- wobei die Steuermittel ein Verzögerungsglied mit einer voreingestellten Schaltzeit aufweisen und ein Erreichen der Zwischenposition (h_{Z}) bei Ablauf der Schaltzeit nach Auslösung der Absenkphase feststellen.

5. Stromabnehmer (2) nach einem der vorangehenden Ansprüche,
- umfassend eine Ablageeinrichtung (15), auf die sich das Traggestänge (4) in der Ablageposition (h_{A}) der Wippenanordnungen (7) stützt,
- wobei ein Strömungsquerschnitt des geöffneten Abluftventils (20) derart bemessen ist, dass bei beschädigungsfreiem Auftreffen des Traggestells (4) auf die Ablageeinrichtung (15) die Dauer der Absenkphase von Zwischen- (h_{Z}) zu Ablageposition (h_{A}) minimiert ist.

6. Stromabnehmer (2) nach einem der vorangehenden Ansprüche,
- wobei der Luftspeicher (17) über eine weitere Abluftleitung (24) mit der Umgebung verbunden ist, in die ein Drosselventil (25) mit fest eingestelltem Durchlassquerschnitt geschaltet ist.

7. Straßenfahrzeug (1) mit einem elektrischen oder hybridelektrischen Traktionsantrieb und mit einem Stromabnehmer (2) nach einem der vorangehenden Ansprüche zur Einspeisung elektrischer Traktionsenergie aus einer zweipoligen Oberleitungsanlage.

## Claims

1. Current collector (2) for an electrically or hybrid-electrically driven road vehicle (1) for supplying electrical traction energy from a two-pole overhead line system having a contact wire (3) for each contact pole, comprising
- an articulated support linkage (4), which, on the contact wire side, supports rocker arrangements (7) with contact strips (8) and , on the vehicle side, has a base joint (9) for mounting on the road vehicle (1), and
- a pneumatic lifting drive (12), which is coupled to the support linkage (4) such that when pressure is applied to the lifting drive (12) the rocker arrangements (7) can be raised from a lower stowed position (h_{A}) into an upper contact position (h_{K}) and when pressure is released the rocker arrangements 7) can be lowered into the stowed position (h_{A}) by their own weight,
- wherein the lifting drive (12) can be pneumatically connected with a compressed air supply (13) for application of pressure and with an air reservoir (17) for release of pressure, and
- wherein the air reservoir (17) can be connected to the ambient via an air duct (16, 16a, 16b) having a vent valve (20),
**characterised in that**
- the vent valve (20) can be connected via control means (21) for controlling a lowering phase of the rocker arrangements (7) by their own weight,
- wherein the control means (21) are embodied to open the vent valve (20) when the rocker arrangements (7) reach an intermediary position (h_{Z}), in which the air pressure increasing in the air reservoir (17) assumes a local maximum value, and
- wherein a storage volume of the air reservoir (17) is measured at a lower level than a working volume of the lifting drive (12).

2. Current collector (2) according to claim 1,
- wherein the control means has a pressure sensor for detecting the air pressure prevailing in the air reservoir (17) and establishing the reaching of the intermediary position (h_{Z}) by way of directly monitoring the air pressure curve in the air reservoir (17).

3. Current collector (2) according to claim 1,
- wherein the vent valve (20) has a pressure membrane (22) and the air duct (16) is formed between air reservoir (17) and vent valve (20) by way of two line branches (16a, 16b) running in parallel and opening into opposing membrane sides of the pressure membrane (22),
- wherein in one (16a) of the two line branches a non-return valve (23) is connected to a barrier effect in the direction of the air reservoir (17), and
- wherein the control means (21) establishes the reaching of the intermediary position (h_{Z}) by way of detecting a pressure difference on opposite sides of the membrane.

4. Current collector (2) according to claim 1,
- wherein the control means has a delay element with a preset switch time and establishes a reaching of the intermediate position (h_{Z}) when the switch time expires after the lowering phase is triggered.

5. Current collector (2) according to one of the preceding claims,
- comprising a storage facility (15), on which the support linkage (4) is supported in the stowed position (h_{A}) of the rocker arrangements (7),
- wherein a flow cross section of the opened vent valve (20) is measured such that the duration of the lowering phase from intermediary position (h_{Z}) to stowed position (h_{A}) is minimised when the supporting frame (4) makes non-destructive contact with the storage facility (15).

6. Current collector (2) according to one of the preceding claims,
- wherein the air reservoir (17) is connected to the ambient via an additional vent line (24) in which a throttle valve (25) with a fixed flow cross section is connected.

7. Road vehicle (1) with an electrical or hybrid-electrical traction drive and with a current collector (2) according to one of the preceding claims for supplying electrical traction energy from a two-pole overhead line system.

## Revendications

1. Collecteur (2) de courant d'un véhicule (1) électrique ou hybride électrique pour l'alimentation en énergie électrique de traction, à partir d'une caténaire bipolaire ayant un fil (3) de contact par pôle de contact, comprenant
- une tringlerie (4) articulée de support, qui porte des agencements (7) d'archet, du côté du fil de support, ayant des frotteurs (8) et, du côté du véhicule, une articulation (9) de base pour l'appui sur le véhicule (1) routier, et
- un entraînement (12) pneumatique de levage, qui est accouplé à la tringlerie (4) de support, de manière à ce que les agencements (7) d'archet puissent, lors de l'alimentation en pression de l'entraînement (12) de levage, être soulevés d'une position (h_{A}) inférieure de repos à une position (h_{K}) supérieure de contact et, lors de la décompression, être abaissés dans la position (h_{A}) de repos sous leur propre poids,
- dans lequel l'entraînement (12) de levage, pour l'alimentation en pression, peut communiquer pneumatiquement avec une alimentation (13) en air comprimé et, pour la décompression, avec un accumulateur (17) d'air, et
- dans lequel l'accumulateur (17) d'air peut, par un conduit (16, 16a, 16b) d'évacuation de l'air comportant une soupape (20) d'évacuation de l'air, communiquer avec l'environnement, **caractérisé**
- **en ce que** la soupape (20) d'évacuation de l'air peut, pour la commande d'une phase d'abaissement sous leur propre poids des agencements (7) d'archet, être mise en circuit par des moyens (21) de commande,
- dans lequel les moyens (21) de commande sont constitués de manière à ouvrir la soupape (20) d'évacuation de l'air, si les agencements (7) d'archet atteignent une position (h_{Z}) intermédiaire, dans laquelle l'air comprimé s'élevant dans l'accumulateur (17) d'air prend une valeur locale maximum, et
- dans lequel un volume de l'accumulateur (17) d'air est dimensionné de manière plus petite qu'un volume de travail de l'entraînement (12) de levage.

2. Collecteur (2) de courant suivant la revendication 1,
- dans lequel les moyens de commande ont un capteur de pression pour la détection de la pression de l'air régnant dans l'accumulateur (17) d'air et constater que la position (h_{Z}) intermédiaire est atteinte par contrôle direct de la courbe de la pression de l'air dans l'accumulateur (17) d'air.

3. Collecteur (2) de courant suivant la revendication 1,
- dans lequel la soupape (20) d'évacuation de l'air a une membrane (22) de pression et le conduit (16) d'évacuation de l'air, entre l'accumulateur (17) d'air et la soupape (20) d'évacuation de l'air, est formé de deux branches (16a, 16b) de conduit s'étendant parallèlement et débouchant sur des faces opposées de la membrane (22) de pression,
- dans lequel, dans l'une (16a) des deux branches de conduit, est monté un clapet (23) antiretour ayant un effet de barrage en direction de l'accumulateur (17) d'air, et
- dans lequel les moyens (21) de commande constatent que la position (h_{Z}) intermédiaire est atteinte par détection d'une différence de pression sur des faces opposées de la membrane.

4. Collecteur (2) de courant suivant la revendication 1,
- dans lequel les moyens de commande ont un organe de temporisation ayant un temps d'arrêt préréglé et constatent que la position (h_{Z}) intermédiaire est atteinte à l'écoulement du temps de commutation après déclenchement de la phase d'abaissement.

5. Collecteur (2) de courant suivant l'une des revendications précédentes,
- comprenant un dispositif (15) de repos, qui appuie la tringlerie (4) de support dans la position (h_{A}) de repos des agencements (7) d'archet,
- dans lequel une section transversale d'écoulement de la soupape (20) ouverte d'évacuation de l'air est proportionnée de manière à ce que, lors de l'arrivée sans dommage de la tringlerie (4) de support sur le dispositif (15) de repos, la durée de la phase d'abaissement de la position (h_{Z}) intermédiaire à la position (h_{A}) de repos soit minimisée.

6. Collecteur (2) de courant suivant l'une des revendications précédentes,
- dans lequel l'accumulateur (17) d'air communique avec l'environnement par un autre conduit (24) d'évacuation d'air, dans lequel est montée une soupape (25) d'étranglement de section transversale de passage réglée de manière fixe.

7. Véhicule (1) routier comprenant un entraînement traction électrique ou hybride électrique et comprenant un collecteur (2) de courant suivant l'une des revendications précédentes pour l'énergie électrique de traction à partir d'une caténaire bipolaire.
